# EUROPEAN PATENT APPLICATION

(11) **EP 4 632 938 A1**
(43) Date of publication of application: **15.10.2025**
(21) Application number: 22969480.7
(22) Date of filing: 26.12.2022
(51) Int. Cl.: H01M 50/531

(54) **SECONDARY BATTERY AND ELECTRONIC DEVICE**

(71) Applicant: Dongguan Amperex Technology Limited, Dongguan City, Guangdong Province 523000 (CN)
(72) Inventor: WANG, Jinli, Dongguan, Guangdong 523000 (CN); ZENG, Qiao, Dongguan, Guangdong 523000 (CN); YAN, Dongyang, Dongguan, Guangdong 523000 (CN)
(74) Representative: Icosa
(86) International application number: PCT/CN2022/142030
(87) International publication number: WO 2024/138323

(57) **Abstract**

This application discloses a secondary battery and an electronic device. The secondary battery includes a housing, a first tab, and an electrode assembly. The electrode assembly includes a first electrode plate. The first electrode plate includes a first current collector, a first active material layer disposed on a first surface of the first current collector and a second active material layer disposed on a second surface of the first current collector. The first active material layer is provided with a first groove exposing a first region of the current collector. A second region of the first current collector is covered with a second active material layer. The first region is opposite to the second region in a second direction. The first tab includes a first connecting portion, a first bent portion, and a second connecting portion that are connected in sequence. The first connecting portion extends out from a sealing edge of the housing. The second connecting portion is at least partially located in the first groove and connected to the first region. The first bent portion is bent relative to the second connecting portion toward the second direction. This arrangement reduces the risk that the thickness of the first tab makes the secondary battery thicker, and contributes to improvement of the energy density.

## Description

### TECHNICAL FIELD

This application relates to the technical field of energy storage, and in particular, to a secondary battery and an electronic device.

### BACKGROUND

A secondary battery is an apparatus that converts external energy into electrical energy and stores the electrical energy in the apparatus so that the electrical energy is readily available for powering an electronic device. For example, the secondary battery is a lithium-ion battery or a sodium-ion battery. The secondary battery is applicable for use in electronic devices such as a mobile phone, a tablet, or a laptop computer. Generally, a secondary battery includes a housing and an electrode assembly. A receiving cavity is formed in the housing. The electrode assembly is housed in the receiving cavity. The electrode assembly includes a first electrode plate, a separator, and a second electrode plate. The separator is disposed between the first electrode plate and the second electrode plate. The first electrode plate and the second electrode plate are of different polarities.

### SUMMARY

An objective of this application is to provide a secondary battery and an electronic device that are capable of improving energy density.

To achieve the above objective, this application discloses the following technical solutions:

A secondary battery is provided, including a packaging bag, an electrode assembly, and a first tab. The electrode assembly is housed in the packaging bag, and the packaging bag is provided with a sealing edge. The electrode assembly includes a first electrode plate, a second electrode plate, and a separator. The separator is disposed between the first electrode plate and the second electrode plate. The first electrode plate includes a first current collector, a first active material layer, and a second active material layer. The first current collector includes a first surface and a second surface opposite to each other. The first active material layer is disposed on the first surface. The second active material layer is disposed on the second surface. The first surface includes a first region. The first active material layer is provided with a first groove exposing the first region. The second surface includes a second region corresponding to the first region. The second region is covered by the second active material layer. The first tab includes a first connecting portion, a first bent portion, and a second connecting portion that are connected in sequence. The first connecting portion extends out of the packaging bag from the sealing edge. The second connecting portion is at least partially located in the first groove and connected to the first region. It is defined that a direction in which the first connecting portion extends out of the packaging bag is a first direction. A direction from the first region to the second region is a second direction. The first direction is perpendicular to the second direction. The first bent portion is bent relative to the second connecting portion toward the second direction.

In this way, the first electrode plate is provided with the first groove, and the second connecting portion is at least partially disposed in the first groove, thereby reducing the risk that the thickness of the first tab makes the secondary battery thicker, and contributing to improvement of the energy density of the secondary battery. In addition, the second active material layer is provided in the second region opposite to the first groove, thereby reducing the risk of a poor interface between the first electrode plate and the second electrode plate caused by thickness unevenness from double-sided grooving of the first electrode plate. The first tab includes a first bent portion that is bent toward the second direction. The first bent portion produces a buffering effect when the first tab is impacted by an external force, reduces the pulling force between the second connecting portion and the first region in a case of single-sided grooving, reduces the risk of failure of the secondary battery, and also reduces the risk of vibration-induced detachment of the first active material layer around the first region and the second active material layer in the second region, thereby improving the safety of the secondary battery.

In some embodiments, a direction perpendicular to both the first direction and the second direction is defined as a third direction. Viewed from the third direction, an acute angle formed by the first bent portion and the second direction is β, satisfying: 20° ≤ β ≤ 70°. When this relationship is satisfied, an angle at which the first bent portion is bent relative to the second connecting portion is relatively appropriate. During a drop, the first bent portion can play a buffering role, thereby reducing the pulling force between the second connecting portion and the first region of the first current collector, and in turn, reducing the risk of detachment of the second connecting portion from the first current collector, and also reducing the risk of detachment of a part of the active material layer caused by the phenomenon that the first bent portion squeezes the electrode plate at an end portion of the electrode assembly, and improving the stability of the secondary battery. Further, the angle β satisfies 30° ≤ β ≤ 60°.

In some embodiments, the first tab includes a first tab surface and a second tab surface opposite to each other. The first tab surface located at the second connecting portion is connected to the first region. The secondary battery includes a sealing element and a first insulation piece. The sealing element includes a sealing portion and a first extension portion. The sealing portion is configured to be hermetically connected to the sealing edge. The first extension portion extends from the sealing portion toward the interior of the packaging bag. The first extension portion includes a first part. The first part is disposed on the first tab surface. The first insulation piece is at least partially disposed on the first tab surface located at the first bent portion. One end of the first insulation piece abuts the first part.

In this way, the first insulation piece reduces the risk that burrs on an edge of the first bent portion pierce the packaging bag, and reduces the risk that the first tab surface in the first bent portion touches the second electrode plate and causes a short circuit.

In some embodiments, the first insulation piece covers at least a part of the first part, thereby enhancing the reliability of connection between the first insulation piece and the first tab. In addition, during a drop, the region, which is used for overlapping with the first part, in the first insulation piece can reduce the risk of detachment of the first part from the first tab surface, thereby improving the sealing performance of the secondary battery.

In some embodiments, the first insulation piece extends along a direction opposite to the first direction so that the first insulation piece covers a part of the second active material layer. This arrangement reduces the risk of detachment of the first insulation piece from the first tab surface. In addition, during a drop, the first insulation piece can suppress the bending of the first bent portion to reduce the risk of detachment of the second connecting portion from the first region. In addition, during the drop, the first insulation piece can also reduce the risk of detachment of the material caused by a squeezing action of the first bent portion on the second active material layer.

In some embodiments, the first insulation piece and the first part are a one-piece member. The one-piece configuration reduces the risk that burrs on the first bent portion pierce the housing. In addition, because the sealing portion and the first part of the first extension portion are a one-piece member, the first part can suppress excessive bending of the first bent portion as constrained by the sealing portion, thereby enhancing the stability of connection between the sealing element and the first tab, and improving the reliability of the secondary battery. In addition, this configuration also reduces the sensitivity of the first part to a nonaqueous electrolyte solution in the packaging bag, thereby improving the reliability of the mounting of the first part.

In some embodiments, the first current collector includes a first edge and a second edge opposite to each other in the first direction. The first tab extends out of the first current collector from the first edge. The first current collector is provided with a first notch recessed from the first edge toward the second edge. The second connecting portion at least partially overlaps the first notch in the second direction.

In contrast to a technical solution in which no first notch is provided in the first region, the first notch provided in the first region in the technical solution hereof reduces the risk that the first active material layer exists at the edge of the first region due to a slitting process. When the first notch overlaps the first tab, the risk of a thickness increase at an edge of the first region caused by the existence of the first active material layer at the edge is reduced.

In some embodiments, the second connecting portion is irradiated with a laser beam so that the second connecting portion is welded to the first region, thereby being conducive to forming a relatively reliable connection between the second connecting portion and the first region, and reducing the impact of the welding on the second active material layer disposed in the second region.

In some embodiments, the first extension portion further includes a second part disposed on the second tab surface. The secondary battery further includes a second insulation piece. The second insulation piece is at least partially disposed on the second tab surface located at the first bent portion. One end of the second insulation piece abuts the second part. The physical isolation by the second insulation piece reduces the risk that the burrs on the first bent portion pierces the packaging bag, and reduces the risk of short-circuiting between the first tab and the packaging bag, thereby improving the safety of the secondary battery. In addition, the second insulation piece suppresses the bending of the first bent portion, reduces the degree of deformation of the first bent portion, and improves the stability of connection between the second connecting portion and the first region.

In some embodiments, the second insulation piece covers at least a part of the second part, thereby enhancing the reliability of connection between the second insulation piece and the first tab. In addition, during a drop, the region, which is used for overlapping with the second part, in the second insulation piece can reduce the risk of detachment of the second part from the first tab surface, thereby improving the sealing performance of the secondary battery.

In some embodiments, another end of the second insulation piece extends along a direction opposite to the first direction so that the second insulation piece covers at least a part of the first groove. In this way, the second insulation piece covers at least a part of the second connecting portion located in the first groove, so that the second insulation piece can be more firmly disposed on the first bent portion. In addition, during a drop, the second insulation piece reduces the risk of detachment of a part of the first active material layer caused by a squeezing action on a sidewall of the first groove.

In some embodiments, the second insulation piece and the second part are a one-piece member. The one-piece design of the second insulation piece and the second part reduces the risk of detachment from the first tab. In addition, the second part is connected to the sealing portion, so that the second part reduces the degree of bending deformation of the first bent part, thereby improving the sealing performance of the secondary battery. In addition, this configuration also reduces the sensitivity of the second part to a nonaqueous electrolyte solution in the packaging bag, thereby improving the reliability of the mounting of the second part.

In some embodiments, the material of the first extension portion includes at least one of polyethylene, polypropylene, polyurethane, or poly(ethylene-co-propylene).

In some embodiments, the second electrode plate includes a second current collector, a third active material layer, and a fourth active material layer. The second current collector includes a third surface and a fourth surface opposite to each other. The third active material layer is disposed on the third surface. The fourth active material layer is disposed on the fourth surface. The third surface includes a third region. The third active material layer is provided with a second groove exposing the third region. The fourth surface includes a fourth region corresponding to the third region. At least a part of the fourth region is not covered by the fourth active material layer. The secondary battery further includes a second tab. The second tab includes a third connecting portion, a second bent portion, and a fourth connecting portion that are connected in sequence. The third connecting portion extends out of the housing from the sealing edge. The fourth connecting portion is at least partially located in the second groove and connected to the third region. The second direction is a direction from the third region to the fourth region. The second bent portion is bent toward the second direction.

The second electrode plate is provided with the second groove, and the fourth connecting portion is at least partially disposed in the second groove, thereby reducing the risk that the thickness of the second tab makes the secondary battery thicker, and contributing to improvement of the energy density of the secondary battery. In addition, at least a part of the fourth region opposite to the second groove is not provided with the fourth active material layer, thereby improving the heat dissipation capability of the second tab through the second current collector during charging and discharging, reducing the impact on the expansion or shrinkage of the fourth active material layer in the fourth region during charging and discharging caused by an excessively high current density at a joint between the fourth connecting portion and the second current collector, and increasing the lifespan of the secondary battery. The second tab includes a second bent portion that is bent toward the second direction. The second bent portion plays a role in mitigating the impact on the electrode assembly when the second tab is impacted by an external force, reduces the pulling force between the fourth connecting portion and the third region, reduces the risk of failure of the secondary battery, and improves the safety of the secondary battery.

In some embodiments, the fourth connecting portion is connected to the third region by ultrasonic welding or resistance welding. In other words, through the welding configuration, the fourth connecting portion and the fourth region can be pressed against each other to implement welding, so that the connection between the fourth connecting portion and the second current collector is highly reliable.

In some embodiments, the second electrode plate includes a second current collector, a third active material layer, and a fourth active material layer. The second current collector includes a third surface and a fourth surface opposite to each other. The third active material layer is disposed on the third surface. The fourth active material layer is disposed on the fourth surface. The third surface includes a third region. The third active material layer is provided with a second groove exposing the third region. The fourth surface includes a fourth region corresponding to the third region. The fourth region is covered by the fourth active material layer. The secondary battery further includes a second tab. The second tab includes a third connecting portion, a second bent portion, and a fourth connecting portion that are connected in sequence. The third connecting portion extends out of the housing from the sealing edge. The fourth connecting portion is at least partially located in the second groove and connected to the third region. The second direction is a direction from the third region to the fourth region. The second bent portion is bent toward the second direction.

The second electrode plate is provided with the second groove, and the fourth connecting portion is at least partially disposed in the second groove, thereby reducing the risk that the thickness of the second tab makes the secondary battery thicker, and contributing to improvement of the energy density of the secondary battery. In addition, the fourth active material layer is provided in the fourth region opposite to the second groove, thereby reducing the risk of thickness unevenness caused by double-sided grooving of the second electrode plate. The second tab includes a second bent portion that is bent toward the second direction. The second bent portion plays a role in mitigating the impact on the electrode assembly when the second tab is impacted by an external force, reduces the pulling force between the fourth connecting portion and the third region, reduces the risk of failure of the secondary battery, and improves the safety of the secondary battery.

In some embodiments, the fourth connecting portion is connected to the third region by laser welding, thereby forming a relatively reliable connection between the fourth connecting portion and the third region, and reducing the impact of the welding on the fourth active material layer disposed in the fourth region.

In some embodiments, the first electrode plate, the second electrode plate, and the separator are stacked and wound to form a jelly-roll structure. Along the second direction, the second connecting portion and the fourth connecting portion are located on two sides of the jelly-roll structure respectively, and the first groove does not overlap the second groove. This arrangement reduces the risk of an excessive thickness of the secondary battery caused by an excessive distance between the first tab and the second tab in the thickness direction of the electrode assembly. The first connecting portion and the third connecting portion are spaced apart without overlapping, thereby improving the sealing performance of the sealing edge.

In some embodiments, the first electrode plate is a positive electrode plate, the second electrode plate is a negative electrode plate, and the first current collector is aluminum foil. In the first direction, the second electrode plate exceeds the first electrode plate, and the separator exceeds the second electrode plate. The positive electrode plate is not grooved in the second region, and the second region is coated with the second active material layer, thereby increasing the energy density of the secondary battery in contrast to a method in which the positive electrode plate is grooved in both the first region and the second region. The first current collector is aluminum foil, so that the first current collector is of suitable flexibility, hardness, and electrical properties and meets requirements in a manufacturing process and a use process. In addition, the second electrode plate exceeds the first electrode plate, and the separator exceeds the second electrode plate, thereby reducing metal dendrites formed during charging and reducing the risk of short-circuiting between the first electrode plate and the second electrode plate.

In some embodiments, the first insulation piece includes a substrate layer and an adhesive layer. In this way, the first insulation piece is an adhesive structural component. During assembling, the first insulation piece can be quickly bonded to the surface of the first tab, thereby saving the time required for assembling the secondary battery.

In some embodiments, the secondary battery further includes an adhesive piece configured to bond the packaging bag to the electrode assembly. The adhesive piece is affixed to an inner surface, opposite to the first region, of the packaging bag, thereby making it convenient to bond the electrode assembly to the housing. The configuration reduces the risk of failure of the secondary battery caused by the relative movement between the electrode assembly and the housing during a drop of the secondary battery. In addition, this configuration also reduces the impact of the adhesive piece on the reliability of connection between the second connecting portion and the first region during the drop, and reduces the impact on the second active material layer provided in the second region.

To achieve the above objective, this application discloses the following technical solution:

An electronic device is provided, including the above-mentioned secondary battery.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a schematic structural diagram of a secondary battery according to an embodiment of this application;
FIG. 2 is a schematic diagram of one of cross-sections taken by sectioning FIG. 1 along an AA line;
FIG. 3 is a schematic diagram of another cross-section taken by sectioning FIG. 1 along an AA line;
FIG. 4 is a schematic diagram of still another cross-section taken by sectioning FIG. 1 along an AA line;
FIG. 5 is a partial schematic diagram of a cross-section taken by sectioning FIG. 1 along a BB line;
FIG. 6 is a schematic diagram of a surface of a first electrode plate and a first tab shown in FIG. 5 after unwinding;
FIG. 7 is a schematic diagram of another surface of a first electrode plate and a first tab shown in FIG. 5 after unwinding;
FIG. 8 is a schematic diagram of a cross-section taken by sectioning FIG. 6 along a DD line;
FIG. 9 is a schematic diagram of a first notch provided in a first region of a first electrode plate;
FIG. 10 is a schematic diagram of abutment between a first insulation piece and a first part shown in FIG. 6;
FIG. 11 is a side view of a one-piece member formed by a first part and a first insulation piece shown in FIG. 6;
FIG. 12 is a side view of abutment between a second part and a second insulation piece shown in FIG. 6;
FIG. 13 is a side view of a one-piece member formed by a second part and a second insulation piece shown in FIG. 6;
FIG. 14 is a schematic diagram of a one-piece member formed by a first part and a first insulation piece as well as a one-piece member formed by a second part and a second insulation piece shown in FIG. 6;
FIG. 15 is a schematic diagram of a cross-section taken by sectioning FIG. 1 along a CC line;
FIG. 16 is a schematic diagram of a surface of a second electrode plate and a second tab shown in FIG. 15 after unwinding;
FIG. 17 is a schematic diagram of another surface of a second electrode plate and a second tab shown in FIG. 15 after unwinding;
FIG. 18 is a schematic diagram of a cross-section taken by sectioning FIG. 16 along an EE line;
FIG. 19 is a schematic diagram of another cross-section taken by sectioning FIG. 1 along an AA line;
FIG. 20 is another schematic diagram of a cross-section taken by sectioning FIG. 1 along a CC line; and
FIG. 21 is a structural block diagram of an electronic device according to another embodiment of this application.

List of reference numerals: 100. secondary battery; 110. packaging bag; 120. electrode assembly; 130. first tab; 140. second tab; 150. first insulation piece; 160. sealing element; 170. second insulation piece; 180. third insulation piece; 190. fourth insulation piece; 200. adhesive piece; 300. electronic device; 111. receiving cavity; 112. sealing edge; 121. first electrode plate; 122. second electrode plate; 123. separator; 1211. first current collector; 1212. first active material layer; 1213. second active material layer; 1211a. first region; 1211b. second region; 1212a. first groove; 1211c. first edge; 1211d. second edge; 121a. flat portion; 131. first connecting portion; 132. first bent portion; 133. second connecting portion; 1301. first tab surface; 1302. second tab surface; 1211e. first notch; 12211. third surface; 12212. fourth surface; 12111. first surface; 12112. second surface; 1210. winding start edge; 151. first insulation edge; 152. second insulation edge; 161. sealing portion; 162. first extension portion; 163. second extension portion; 1621. first part; 1622. second part; 171. third insulation edge; 172. fourth insulation edge; 1221. second current collector; 1222. third active material layer; 1223. fourth active material layer; 1221a. third region; 1221b. fourth region; 1222a. second groove; 141. third connecting portion; 142. second bent portion; 143. fourth connecting portion; 1401. third tab surface; 1402. fourth tab surface; 1223a. third groove.

### DETAILED DESCRIPTION

For ease of understanding this application, the following describes this application in more detail with reference to drawings and specific embodiments. It is hereby noted that an element referred to herein as being "fixed to", "fastened to", or "mounted to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

The secondary batteries mentioned in the following embodiments are not limited to specific battery types, but may include batteries such as a lithium-ion battery and a sodium-ion battery. All batteries that can be charged and discharged fall in the category of secondary batteries described herein. The specific structure of a secondary battery is described below.

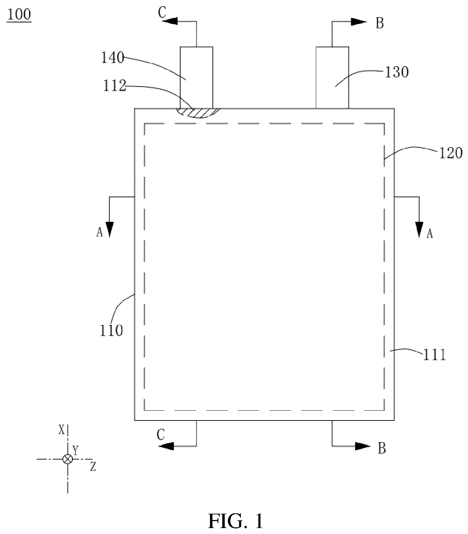

As shown in FIG. 1, an embodiment of this application provides a secondary battery 100, including a packaging bag 110, an electrode assembly 120, and a first tab 130. The packaging bag 110 is provided with a receiving cavity 111 and a sealing edge 112 configured to seal the receiving cavity 111. The receiving cavity 111 is configured to accommodate the electrode assembly 120. One end of the first tab 130 is connected to the electrode assembly 120, and another end of the first tab 130 extends out of the packaging bag 110 from the sealing edge 112.

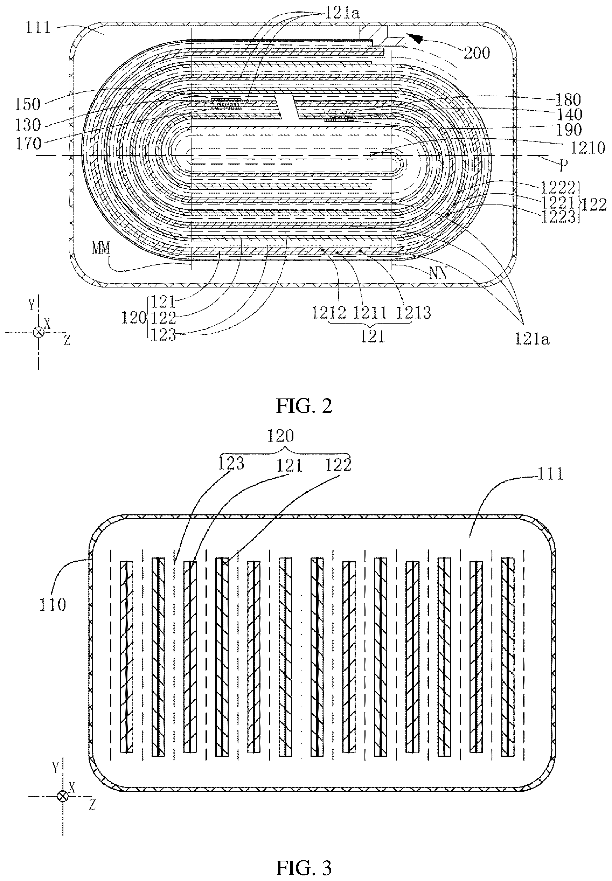

Referring to FIG. 2 to FIG. 4, the electrode assembly 120 includes a first electrode plate 121, a second electrode plate 122, and a separator 123. The separator 123 is disposed between the first electrode plate 121 and the second electrode plate 122. The separator 123 is configured to reduce the risk of short-circuiting between the first electrode plate 121 and the second electrode plate 122. Understandably, the first electrode plate 121 and the second electrode plate 122 are of opposite polarities. If the first electrode plate 121 is a positive electrode plate, the second electrode plate 122 is a negative electrode plate; or, if the first electrode plate 121 is a negative electrode plate, the second electrode plate 122 is a positive electrode plate.

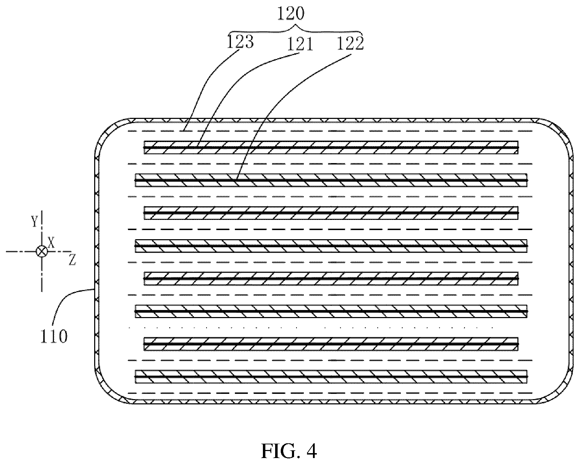

Understandably, the electrode assembly 120 may assume a jelly-roll structure or a stacked structure, depending on actual needs. When the electrode assembly 120 assumes a jelly-roll structure, as shown in FIG. 2, the first electrode plate 121, the separator 123, and the second electrode plate 122 are stacked and wound. When the electrode assembly 120 assumes a stacked-type structure, the numbers of the first electrode plates 121, second electrode plates 122, and separators 123 are plural. The plurality of first electrode plates 121, second electrode plates 122, and separators 123 are stacked along a direction to form a stacked structure. A separator 123 is disposed between a first electrode plate 121 and a second electrode plate 122 that are adjacent to each other, as shown in FIG. 3 and FIG. 4. In this case, the thickness direction of the electrode assembly 120 may be the same as or different from the thickness direction of the secondary battery 100. As shown in FIG. 3, the thickness direction of the electrode assembly 120 is different from the thickness direction of the secondary battery 100. As shown in FIG. 4, the thickness direction of the electrode assembly 120 is the same as the thickness direction of the secondary battery 100.

To facilitate the description of the technical solution of this application, the drawings show a jelly-roll electrode assembly 120 as an example. However, the structure of the electrode assembly 120 of this application is not limited to the jelly-roll structure, but may be a stacked structure instead.

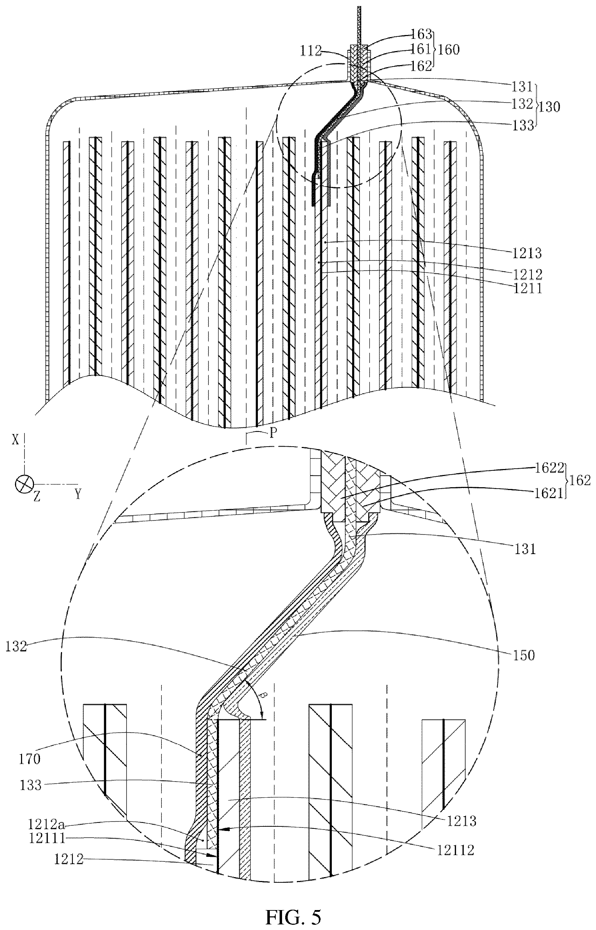

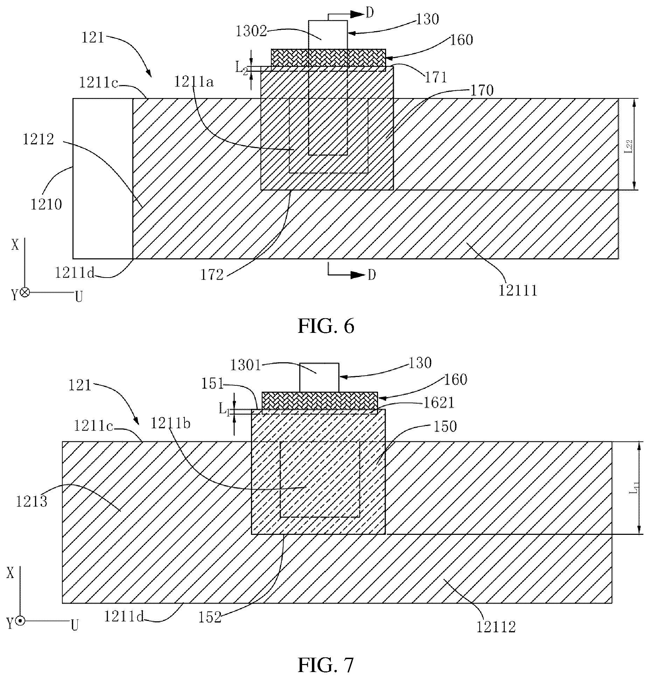

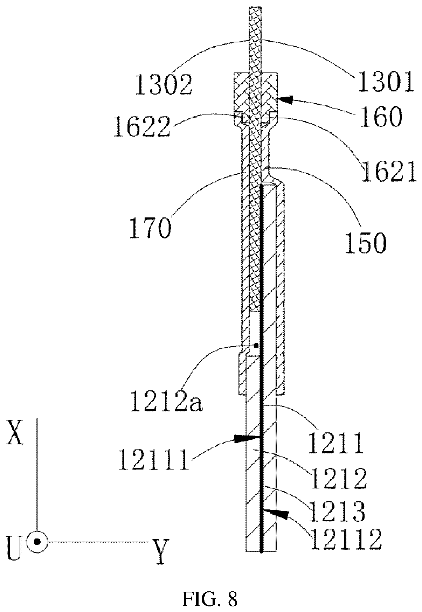

As shown in FIG. 5, FIG. 5 is a schematic diagram of a cross-section taken by sectioning FIG. 1 along a BB line, and the first electrode plate 121 includes a first current collector 1211, a first active material layer 1212, and a second active material layer 1213. The first current collector 1211 includes a first surface 12111 and a second surface 12112 disposed opposite to each other. The first active material layer 1212 is provided on a first surface 12111 of the first current collector 1211. The second active material layer 1213 is provided on a second surface 12112 of the first current collector 1211. Referring to FIG. 6 to FIG. 8, FIG. 6 is a schematic diagram of the first surface 12111 when the first electrode plate 121 and the first tab 130 are in an unwound state. FIG. 7 is a schematic diagram of the second surface 12112 when the first electrode plate 121 and the first tab 130 are in the unwound state. FIG. 8 is a schematic diagram of a cross-section of FIG. 6 sectioned along a DD line. The extension direction of a width edge of the first electrode plate 121 is the same as a first direction X. The extension direction of a length edge of the first electrode plate 121 is a fourth direction U. The first surface 12111 of the first current collector 1211 includes a first region 1211a. The first active material layer 1212 is provided with a first groove 1212a exposing a first region 1211a. The second surface 12112 of the first current collector 1211 includes a second region 1211b opposite to the first region 1211a. The second region 1211b is covered with the second active material layer 1213. In other words, the first current collector 1211 is not provided with the first active material layer 1212 in the first region 1211a, so that a first groove 1212a is formed on the first electrode plate 121. The first current collector 1211 includes a first edge 1211c and a second edge 1211d opposite to each other in the first direction X.

Referring back to FIG. 5, the first tab 130 includes a first connecting portion 131, a first bent portion 132, and a second connecting portion 133 that are connected in sequence. The first connecting portion 131 extends out of the packaging bag 110 from the sealing edge 112. The second connecting portion 133 is at least partially located in the first groove 1212a and connected to the first region 1211a.

It is defined that a direction in which the first connecting portion 131 extends out of the packaging bag 110 is the first direction X, and a direction from the first region 1211a to the second region 1211b is a second direction Y. The first direction X is perpendicular to the second direction Y.

The first bent portion 132 is bent relative to the second connecting portion 133 toward the second direction Y. The first tab 130 includes a first tab surface 1301 and a second tab surface 1302 opposite to each other. The first tab surface 1301 is disposed close to the first groove 1212a in the second direction Y.

In this way, the first electrode plate 121 is provided with the first groove 1212a, and the second connecting portion 133 is at least partially disposed in the first groove 1212a, thereby reducing the risk that the thickness of the first tab 130 makes the secondary battery 100 thicker, and contributing to improvement of the energy density of the secondary battery 100. In addition, the second active material layer 1213 is provided in the second region 1211b opposite to the first region 1211a, thereby reducing the risk of a poor interface between the first electrode plate 121 and the second electrode plate 122 caused by thickness unevenness from double-sided grooving of the first electrode plate 121.

The first tab 130 includes a first bent portion 132 bent toward the second direction Y. When the secondary battery 100 drops or collides, the first bent portion 132 can reduce the impact force of the electrode assembly 120 on the sealing edge 112, reduce the risk of electrolyte leakage from the sealing edge 112 caused by the impact of the electrode assembly 120, and improve the safety of the secondary battery 100. In addition, in contrast to the method in which the first bent portion 132 bends relative to the second connecting portion 133 along a direction opposite to the second direction Y, the first bent portion 132 in this application bends relative to the second connecting portion 133 toward the second direction Y. The first bent portion 132 can serve as a buffer section for the first tab 130, reduce the risk that the first connecting portion 131 directly pulls the second connecting portion 133 in the case of single-sided grooving, and reduce the risk of detachment of the second connecting portion 133 from the first region 1211a, thereby improving the stability of connection between the second connecting portion 133 and the first region 1211a, and improving the reliability of the secondary battery 100. In addition, the method disclosed herein also reduces the risk of vibration-induced detachment of the first active material layer 1212 around the first region 1211a and the second active material layer 1213 in the second region 1211b.

Understandably, the second connecting portion 133 may be connected to the first region 1211a in various manners. The second connecting portion 133 may be welded to the first region 1211a by irradiating the second connecting portion 133 with a laser beam, or the second connecting portion 133 may be connected to the first region 1211a by applying a conductive adhesive, or by other connection manners. The connection manner is not limited to the examples mentioned here, as long as the second connecting portion 133 can be connected to the first region 1211a. In some embodiments, the second connecting portion 133 is irradiated with a laser beam so that the second connecting portion 133 is welded to the first region 1211a, thereby being conducive to forming a relatively reliable connection between the second connecting portion 133 and the first region 1211a, and reducing the impact of the welding on the second active material layer 1213 disposed in the second region 1211b.

Understandably, the packaging bag 110 is made of a light and flexible material. Therefore, the secondary battery 100 using the packaging bag 110 as a shell possesses a relatively high energy density, but is easily deformable when subjected to an external force, so that the first tab 130 of the battery 100 is prone to be pulled. The mounting method of the first tab 130 and the electrode assembly 120 according to this application can reduce the risk of detachment of the first tab 130 from the first electrode plate 121 when the first tab 130 is pulled by an external force, thereby improving the reliability of the secondary battery prepared by using the packaging bag 110.

In some embodiments, the first electrode plate 121 is a positive electrode plate, and the second electrode plate 122 is a negative electrode plate. In the first direction X, the second electrode plate 122 exceeds the first electrode plate 121, and the separator 123 exceeds the second electrode plate 122, thereby reducing the risk of short-circuiting between the first electrode plate 121 and the second electrode plate 122, and also reducing the risk of lithium plating in the electrode assembly 120. Further, the first current collector 1211 is aluminum foil, so that the first current collector 1211 is of suitable flexibility, hardness, and electrical properties and meets requirements in a manufacturing process and a use process. In addition, the second electrode plate 122 exceeds the first electrode plate 121, and the separator 123 exceeds the second electrode plate 122, thereby reducing metal dendrites formed during charging and reducing the risk of short-circuiting between the first electrode plate 121 and the second electrode plate 122.

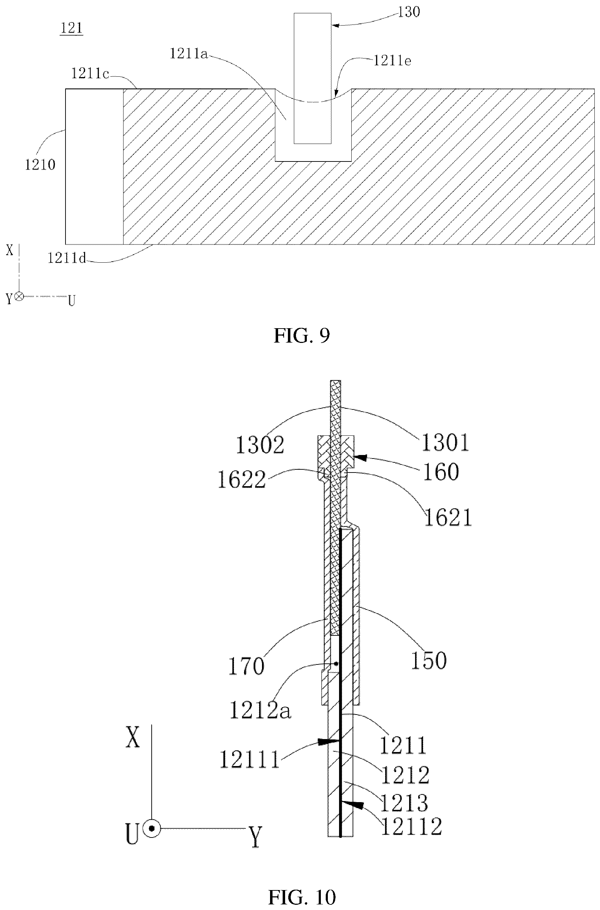

In some embodiments, as shown in FIG. 9, the first current collector 1211 is provided with a first notch 1211e recessed from the first edge 1211c toward the second edge 1211d. The first notch 1211e at least partially overlaps the second connecting portion 133 along the second direction Y. This arrangement reduces the risk that the first active material layer 1212 exists at the edge of the first region 1211a of the first electrode plate 121 formed in a slitting process, thereby reducing the risk that the thickness of the overlap portion between the second connecting portion 133 and the first region 1211a is increased due to the residual first active material layer 1212 at the overlap portion, and increasing the energy density of the secondary battery 100.

In some embodiments, referring back to FIG. 7, the secondary battery 100 further includes a first insulation piece 150. The first insulation piece 150 is at least partially disposed on the first tab surface 1301 located at the first bent portion 132. The first insulation piece 150 includes a first insulation edge 151 facing away from the first electrode plate 121 in the first direction X, and a second insulation edge 152 opposite to the first insulation edge 151 in the first direction X.

In this way, the physical isolation by the first insulation piece 150 reduces the risk that the burrs on the first bent portion 132 pierce the packaging bag 110, reduces the risk of short-circuiting between the first bent portion 132 and the packaging bag 110, and reduces the risk that the first bent portion 132 is short-circuited to the second electrode plate 122 when impacted during a drop of the secondary battery 100, thereby improving the safety of the secondary battery 100.

Understandably, the first insulation piece 150 may be insulation tape. The first insulation piece 150 includes a substrate layer and an adhesive layer disposed on the substrate layer. The adhesive layer is configured to bond to the first tab surface 1301. In some embodiments, the substrate layer may be made of materials including polypropylene, polyethylene terephthalate, polyimide, and the like. The adhesive layer may be made of materials including acrylate ester, rubber, silicone, polyurethane, polyolefin, and the like. Definitely, the first insulation piece 150 may be made of other materials as long as the first insulation piece can serve the functions of insulation and bonding.

In some embodiments, referring back to FIG. 5, the secondary battery 100 further includes a sealing element 160. The sealing element 160 includes a sealing portion 161, a first extension portion 162, and a second extension portion 163. The sealing portion 161 is configured to be hermetically connected to the sealing edge 112. The first extension portion 162 extends from the sealing portion 161 toward the inside of the packaging bag 110. The second extension portion 163 extends from the sealing portion 161 toward the outside of the packaging bag 110. In this way, the disposed sealing element 160 can implement stronger bonding of the sealing edge 112, improve the sealing performance of the secondary battery 100, and reduce the risk of electrolyte leakage in the secondary battery 100. Understandably, the materials of the sealing portion 161, the first extension portion 162, and the second extension portion 163 include at least one of polyethylene, polypropylene, polyethylene terephthalate, polyurethane, or poly(ethylene-co-propylene).

Further, the first extension portion 162 includes a first part 1621. The first part 1621 is disposed on the first tab surface 1301. The first part 1621 abuts one end of the first insulation piece 150. Understandably, the technical solutions for the abutment between the first part 1621 and one end of the first insulation piece 150 include the following two technical solutions:
(1) As shown in FIG. 8, the first part 1621 partially overlaps the first insulation piece 150 in the second direction Y. In other words, the first insulation piece 150 covers at least a part of the first part 1621, thereby enhancing the reliability of connection between the first insulation piece 150 and the first tab 130. In addition, during a drop, the region, which is used for overlapping with the first part 1621 in the first insulation piece 150 can reduce the risk of detachment of the first part 1621 from the first tab surface 1301, thereby improving the sealing performance of the secondary battery 100. In this case, the dimension between the end edge of the first part 1621 along a direction opposite to the first direction X and the first insulation edge 151 is L₁, and the dimension between the second insulation edge 152 and the first edge 1211c in the first direction X is L₁₁, satisfying: 1 mm ≤ L₁, and 0 mm < L₁₁.
   Further, 1 mm ≤ L₁, and 2 mm ≤ L₁₁, so that the first insulation piece 150 covers an appropriate area of the first part 1621 and the first electrode plate 121, thereby reducing the risk of detachment of the first insulation piece 150 from the first tab 130 during a drop, and improving the sealing performance.
(2) As shown in FIG. 10, the first part 1621 abuts an end surface of the first insulation piece 150 in the first direction X. In this case, the first part 1621 does not overlap the first insulation piece 150 in the second direction Y, thereby conveniently covering the first tab surface 1301 as much as possible, reducing the risk that the burrs on the first tab surface 1301 are exposed and pierce the packaging bag 110, improving the safety performance of the secondary battery 100, and reducing the risk that the first insulation piece 150 enters the sealing edge 112 and affects the sealing reliability when the sealing edge 112 is formed on the packaging bag 110.

In some embodiments, one end of the first insulation piece 150 extends along a direction opposite to the first direction X so that the first insulation piece 150 covers a part of the second active material layer 1213, thereby reducing the risk of detachment of the first insulation piece 150 from the first tab surface 1301. In addition, during a drop, the first insulation piece 150 can suppress the bending of the first bent portion 132 to reduce the risk of detachment of the second connecting portion 133 from the first region 1211a. In addition, during the drop, the first insulation piece 150 can also reduce the risk of detachment of the material caused by a squeezing action of the first bent portion 132 on the second active material layer 1213.

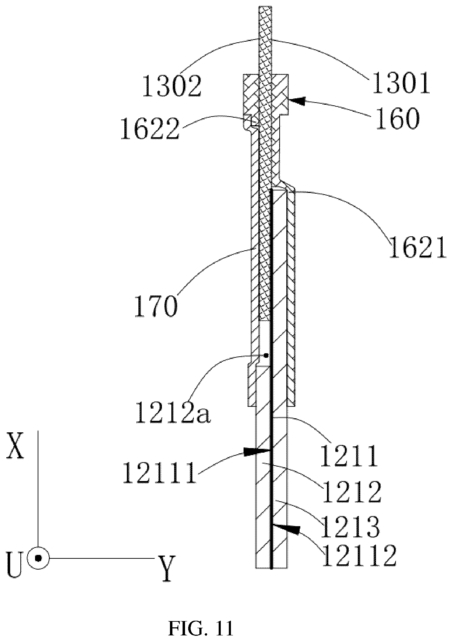

In some embodiments, as shown in FIG. 11, the first insulation piece 150 and the first part 1621 are a one-piece member. In other words, the first part 1621 partially extends and replaces the original first insulation piece 150, thereby reducing the risk that the burrs on the first bent portion 132 pierce the housing. In addition, because the sealing portion 161 and the first part 1621 of the first extension portion 162 are a one-piece member, the first part 1621 can suppress the bending of the first bent portion 132 as constrained by the sealing portion 161, thereby enhancing the stability of connection between the sealing element 160 and the first tab 130, and improving the reliability of the secondary battery 100.

In some embodiments, referring back to FIG. 5 to FIG. 6, the secondary battery 100 further includes a second insulation piece 170. The second insulation piece 170 is disposed on the second tab surface 1302 located at the first bent portion 132. The second insulation piece 170 can physically isolate the burrs of the first tab 130 on the second tab surface 1302, thereby reducing the risk that the packaging bag 110 is pierced by the burrs, and improving the safety performance of the secondary battery 100. In addition, the second insulation piece 170 can suppress the bending of the first bent portion 132, thereby reducing the degree of deformation of the first bent portion 132 during a drop, reducing the impact force of the electrode assembly 120 on the sealing edge 112, reducing the risk of bursting the sealing edge 112, and improving the reliability of the secondary battery 100. The second insulation piece 170 includes a third insulation edge 171 facing away from the first electrode plate 121 in the first direction X, and a fourth insulation edge 172 opposite to the third insulation edge 171 in the first direction X.

In some embodiments, the first extension portion 162 further includes a second part 1622. The second part 1622 is disposed opposite to the first part 1621. The second part 1622 is disposed on the second tab surface 1302. The second part 1622 abuts one end of the second insulation piece 170. Understandably, the technical solutions for the abutment between the second part 1622 and one end of the second insulation piece 170 include the following two technical scenarios:

(3) The second part 1622 partially overlaps the second insulation piece 170 in the second direction Y. In other words, the second insulation piece 170 covers at least a part of the second part 1622, thereby enhancing the reliability of connection between the second insulation piece 170 and the first tab 130. In addition, during a drop, the second insulation piece 170 can reduce the degree of bending deformation of the first bent portion 132, and reduce the impact force of the electrode assembly 120 on the sealing edge 112, thereby improving the sealing performance of the secondary battery 100. In addition, the region, which is used for overlapping with the second part 1622, in the second insulation piece 170 can also reduce the risk of detachment of the second part 1622 from the first tab surface 1301. In this case, the dimension between the end edge of the second part 1622 along a direction opposite to the first direction X and the third insulation edge 171 is L₂, and the dimension between the fourth insulation edge 172 and the first edge 1211c in the first direction X is L₂₂, satisfying: L₂ ≤ 3 mm, and L₂₂ ≤ 6 mm. In this way, the second insulation piece 170 covers an appropriate area of the second part 1622 and the first electrode plate 121, thereby reducing the adverse effect on the sealing performance of the secondary battery 100 caused by an excessive coverage area of the second insulation piece 170 on the second part 1622, and reducing the adverse effect on the energy density of the secondary battery caused by an excessive coverage area of the second insulation piece 170 on the first electrode plate 121.

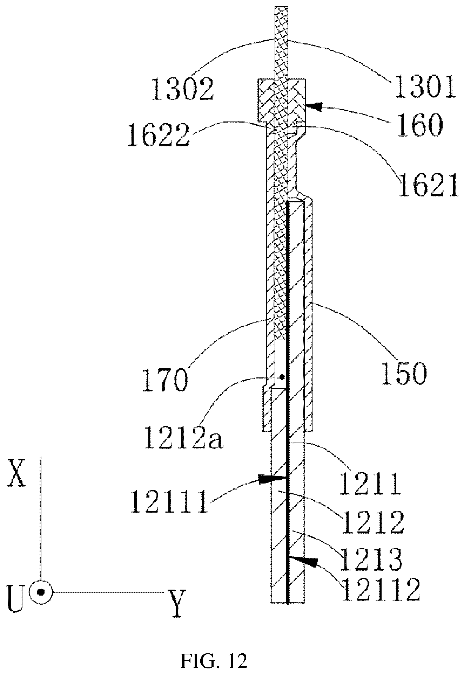

(4) As shown in FIG. 12, the second part 1622 abuts an end surface of the second insulation piece 170 in the first direction X. In this case, the second part 1622 does not overlap the second insulation piece 170 in the second direction Y, thereby conveniently covering the second tab surface 1302 as much as possible, reducing the risk that the burrs on the second tab surface 1302 are exposed and pierce the packaging bag 110, improving the safety performance of the secondary battery 100, and reducing the risk that the second insulation piece 170 enters the sealing edge 112 and affects the sealing reliability when the sealing edge 112 is formed on the packaging bag 110.

In some embodiments, one end of the second insulation piece 170 extends along a direction opposite to the first direction X so that the second insulation piece 170 covers at least a part of the first groove 1212a. In this way, the second insulation piece 170 covers at least a part of the second connecting portion 133 located in the first groove 1212a, so that the second insulation piece 170 can be more firmly disposed on the first bent portion 132. In addition, during a drop, the second insulation piece 170 reduces the risk of detachment of a part of the first active material layer 1212 caused by a squeezing action on a sidewall of the first groove 1212a. Further, the second insulation piece 170 fully covers the first groove 1212a, thereby further restricting the second connecting portion 133, suppressing the second connecting portion 133 from detaching from the first region 1211a, improving the stability of connection between the second connecting portion 133 and the first region 1211a more effectively, and reducing the risk that the burrs on the inner wall of the first groove 1212a pierce the separator 123.

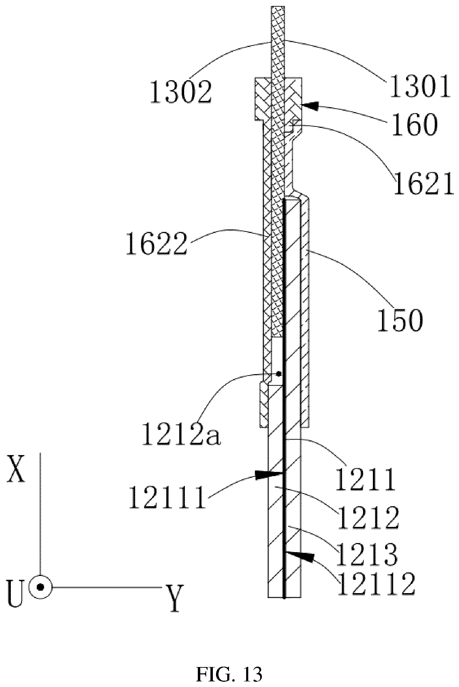

In some embodiments, as shown in FIG. 13, the second insulation piece 170 and the second part 1622 are a one-piece member. In other words, the second part 1622 extends toward the second connecting portion 133 and replaces the second insulation piece 170. In contrast to the technical solution in which the second insulation piece 170 is separate from the second part 1622, the one-piece design of the second insulation piece 170 and the second part 1622 reduces the risk of detachment from the first tab 130. In addition, the second part 1622 is connected to the sealing portion 161, so that the second part 1622 reduces the degree of bending deformation of the first bent part 132, thereby improving the sealing performance of the secondary battery 100. In addition, this configuration also reduces the sensitivity of the second part 1622 to a nonaqueous electrolyte solution in the packaging bag 110, thereby improving the reliability of the mounting of the second part 1622.

Understandably, the dimension L₁ between the end edge of the first part 1621 along a direction opposite to the first direction X and the first insulation edge 151, the dimension L₁₁ between the second insulation edge 152 and the first edge 1211c in the first direction X, the dimension L₂ between the end edge of the second part 1622 along the direction opposite to the first direction X and the third insulation edge 171, and the dimension L₂₂ between the fourth insulation edge 172 and the first edge 1211c in the first direction X are all measured when the first tab 130 is in an unwound state. Definitely, if the first electrode plate 121 is in a wound state, the first electrode plate 121 needs to be unwound before such dimensions are measured, as shown in FIG. 6 to FIG. 7. In this case, the first tab 130 is relatively perpendicular to the first current collector 1211.

Likewise, the second insulation piece 170 may be insulation tape. The second insulation piece 170 includes a substrate layer and an adhesive layer disposed on the substrate layer. The adhesive layer is configured to bond to the second tab surface 1302. In some embodiments, the substrate layer may be made of materials including polypropylene, polyethylene terephthalate, polyimide, and the like. The adhesive layer may be made of materials including acrylate ester, rubber, silicone, polyurethane, polyolefin, and the like. Definitely, the second insulation piece 170 is not limited to the insulation tape mentioned here, but may be made of other materials as long as the insulation piece can serve the functions of insulation and bonding.

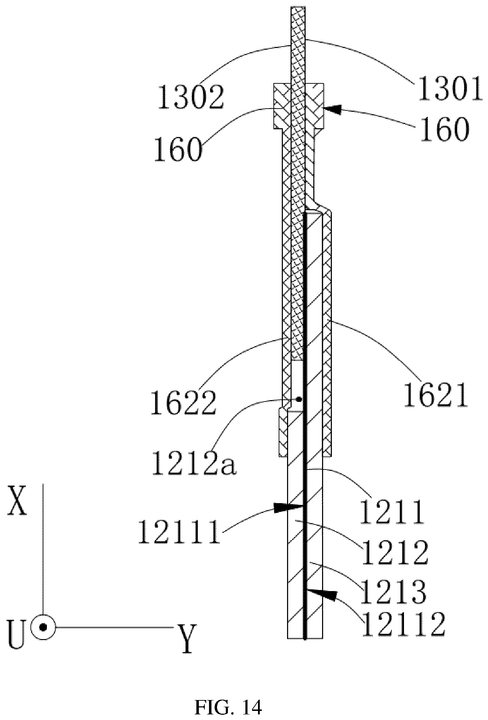

In some embodiments, as shown in FIG. 14, the first insulation piece 150 and the first part 1621 are a one-piece member, and the second insulation piece 170 and the second part 1622 are a one-piece member, thereby being more conducive to reducing the degree of deformation of the first bent portion 132, and in turn, prolonging the time for transmitting the impact of the electrode assembly 120 to the sealing edge 112 during drop, reducing the impact force of the electrode assembly 120 on the sealing edge 112, reducing the risk of bursting the sealing edge 112, and improving the reliability of the secondary battery 100.

In some embodiments, referring back to FIG. 5, a direction perpendicular to both the first direction X and the second direction Y is defined as a third direction Z. Viewed from the third direction Z, an angle formed by the first bent portion 132 and the second direction Y is β. Understandably, because the shape of the first bent portion 132 may be non-linear, the angle formed between the first bent portion 132 and the second direction Y means an angle between a line connecting the head end and tail end of the first bent portion 132 and the second direction Y.

The applicant hereof finds that, when the angle β between the first bent portion 132 and the second direction Y satisfies a specified relationship, the reliability and safety of the secondary battery 100 can be improved.

A control group and an experimental group are set up for comparison in a drop test. In the control group, the first bent portion 132 is bent toward a direction opposite to the second direction Y. In the experimental group, the first bent portion 132 is bent toward the second direction Y with a different value of the angle β. The test conditions for each group of experiments are as follows: 10 battery cells are tested for 5 rounds, and in each round, each battery cell is dropped from a height of 1 m, with 6 sides and 4 corners landing on the ground separately. The criteria for passing the test is that the sealing edge is not burst open after the battery cell is dropped, and the voltage drop is less than 50 mV. The experimental results obtained from the experiments are as follows:

**Table 1 Drop test results of the battery cells with different values of angle β**

| Serial number | β | L₂ | L₂₂ | Battery capacity | Test result |
|---|---|---|---|---|---|
| Control group 1 | 15 | 1.5 | 3 | 3920 | 0/10 |
| Experimental group 1 | 15 | 1.5 | 3 | 3920 | 5/10 |
| Experimental group 2 | 20 | 1.5 | 3 | 3920 | 7/10 |
| Experimental group 3 | 30 | 1.5 | 3 | 3920 | 10/10 |
| Experimental group 4 | 45 | 1.5 | 3 | 3920 | 10/10 |
| Experimental group 5 | 50 | 1.5 | 3 | 3920 | 10/10 |
| Experimental group 6 | 60 | 1.5 | 3 | 3920 | 10/10 |
| Experimental group 7 | 70 | 1.5 | 3 | 3920 | 10/10 |
| Experimental group 8 | 75 | 1.5 | 3 | 3920 | 5/10 |
| Experimental group 9 | 45 | 1.5 | 7 | 3890 | 10/10 |
| Experimental group 10 | 45 | 1.5 | 0 | 3920 | 6/10 |
| Experimental group 11 | 45 | 0 | 3 | 3920 | 5/10 |
| Experimental group 12 | 45 | 3.5 | 3 | 3920 | 4/10 |
| Experimental group 13 | 45 | 0 | 3 | 3920 | 10/10 |

In the above experimental groups, the second insulation piece 170 is separate from the sealing element 160 in experimental groups 1 to 12, and the second insulation piece 170 and the sealing element 160 are a one-piece member in experimental group 13.

As can be seen from control group 1 and experimental groups 1 to 13, when the first bent portion 132 is bent toward the second direction Y, the reliability and safety of the battery cell are significantly improved.

As can be seen from experimental groups 1 to 8, when the angle β satisfies 20° ≤ β ≤ 70°, the pass rate of the battery cells in each experimental group is at least more than 70%, and the reliability and safety performance of the battery cells are relatively high. When the angle β satisfies 30° ≤ β ≤ 60°, the pass rate of the battery cells in each experimental group 100%, and the reliability and safety performance of the battery cells are even higher.

As can be seen from experimental group 4 versus experimental group 9, when the value of L₂₂ is excessively large, which indicates a larger coverage area of the second insulation piece 170 covering the first electrode plate 121 in the first direction X, the capacity of the battery cell will decrease, thereby reducing the energy density of the battery cell.

As can be seen from experimental group 4 versus experimental group 10, the second insulation piece 170 partially overlaps the first electrode plate 121, thereby improving the pass rate of the battery cells. In other words, the partial overlap between the second insulation piece 170 and the first electrode plate 121 improves the reliability and safety performance of the battery cells.

As can be seen from experimental group 4 versus experimental group 11, the second insulation piece 170 partially overlaps the sealing element 160, thereby improving the pass rate of the battery cells. In other words, the partial overlap between the second insulation piece 170 and the sealing element 160 improves the reliability and safety performance of the battery cell.

As can be seen from experimental group 4 versus experimental group 12, when the overlap area between the second insulation piece 170 and the sealing element 160 in the first direction X is excessively large, the pass rate of the battery cells decreases instead. That is because the excessive overlap area between the second insulation piece 170 and the sealing element 160 in the first direction X adversely affects the sealing performance of the sealing edge 112, so that the sealing edge 112 is prone to be burst open due to the poor sealing performance of the sealing edge during a drop of the battery cell.

As can be seen from experimental group 11 versus experimental group 13, when the second insulation piece 170 and the second part 1622 are a one-piece member, which indicates that the second part 1622 extends along a direction opposite to the first direction X and replaces the second insulation piece 170, because the second part 1622 is connected to the sealing portion 161, the second part 1622 is caused to extend along the first direction X, and the part, which overlaps the first electrode plate 121, in the second part is fastened to the surface of the first tab 130, thereby improving the reliability and safety performance of the battery cell.

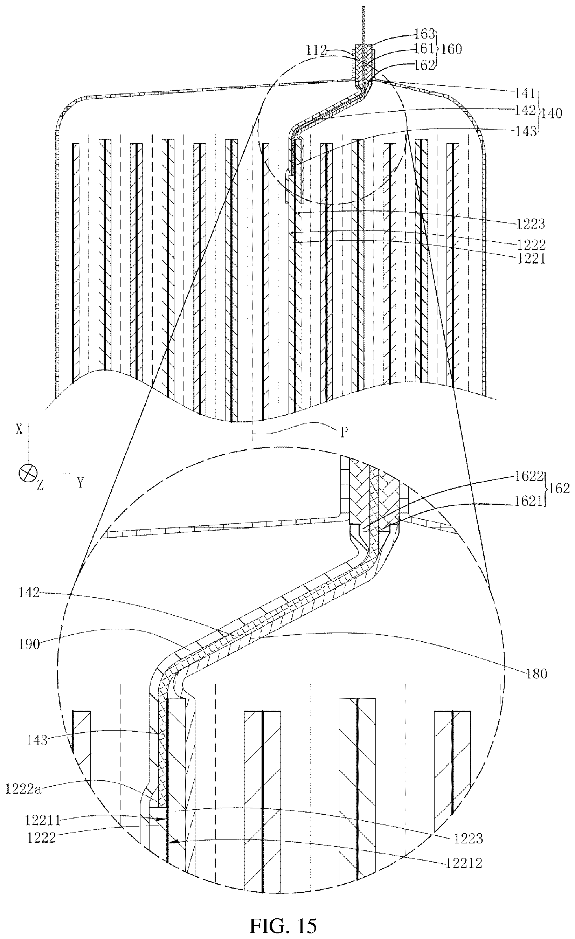

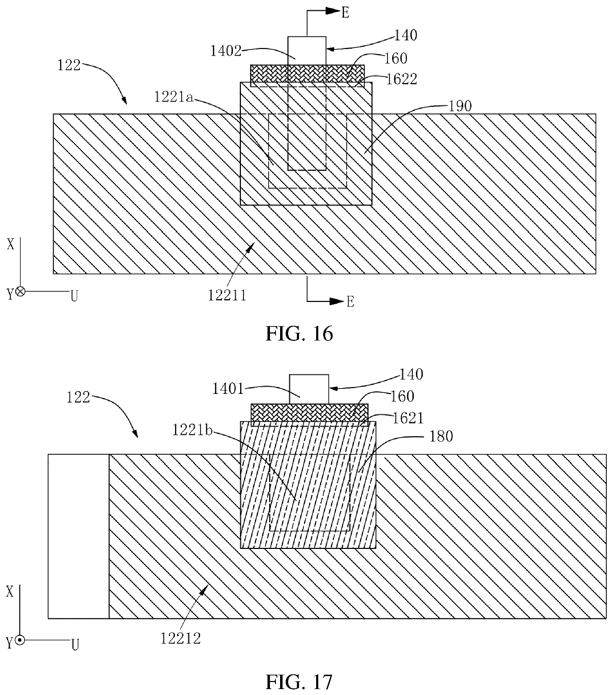

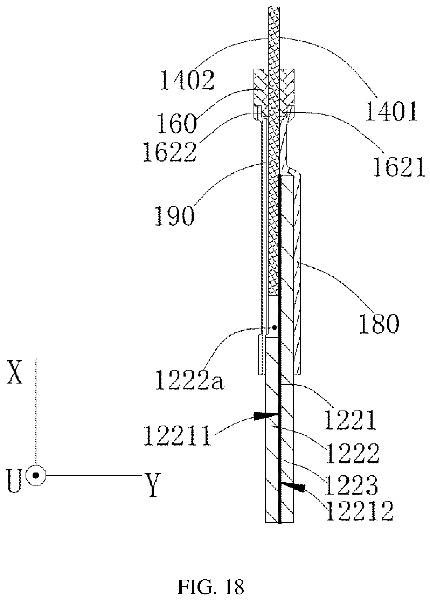

Understandably, the second electrode plate 122 may be provided with grooves on both sides. In other words, a part of the current collector of the second electrode plate 122 is not covered with an active material layer. Alternatively, the same structure as the first electrode plate 121 may apply, or other structures may apply. The specific structure may be selected according to actual needs. In some embodiments, as shown in FIG. 15 to FIG. 18, the second electrode plate 122 assumes a structure similar to that of the first electrode plate 121. Specifically, the second electrode plate 122 includes a second current collector 1221, a third active material layer 1222, and a fourth active material layer 1223. The second current collector 1221 includes a third surface 12211 and a fourth surface 12212 disposed opposite to each other. The third active material layer 1222 is provided on the third surface 12211 of the second current collector 1221, and the fourth active material layer 1223 is provided on the fourth surface 12212 of the second current collector 1221. Referring to FIG. 16 to FIG. 17, FIG. 16 is a schematic diagram of the second electrode plate 122 and the second tab 140 in an unwound state. The extension direction of the width edge of the second electrode plate 122 is the same as the first direction X. The extension direction of the length edge of the second electrode plate 122 is the fourth direction U. The third surface 12211 of the second current collector 1221 includes a third region 1221a. The third active material layer 1222 is provided with a second groove 1222a exposing the third region 1221a. The fourth surface 12212 of the second current collector 1221 includes a fourth region 1221b opposite to the third region 1221a. The fourth region 1221b is covered by the fourth active material layer 1223. In other words, the second current collector 1221 is not provided with the third active material layer 1222 in the third region 1221a, so that a second groove 1222a is formed on the second electrode plate 122.

The secondary battery 100 further includes a second tab 140. The second tab 140 includes a third connecting portion 141, a second bent portion 142, and a fourth connecting portion 143 connected in sequence. The fourth connecting portion 143 is at least partially located in the second groove 1222a and connected to the third region 1221a. The two opposite surfaces of the second tab 140 are a third tab surface 1401 and a fourth tab surface 1402.

In some embodiments, the third connecting portion 141 extends out of the packaging bag 110 from the sealing edge 112. In this case, the third connecting portion 141 directly serves as an electrode of one polarity of the secondary battery 100, either positive or negative. Correspondingly, the first connecting portion 131 serves as an electrode of the other polarity of the secondary battery 100.

In the above situation, the second bent portion 142 contributes to reducing the risk of wobbling of the electrode assembly 120 relative to the packaging bag 110, reduces the impact force of the electrode assembly 120 on the sealing edge 112 during a drop of the secondary battery 100, reduces the risk of bursting the sealing edge 112, and improves the reliability of the secondary battery 100.

In some embodiments, referring back to FIG. 15 to FIG. 18, the secondary battery 100 further includes a third insulation piece 180. The third insulation piece 180 is at least partially disposed on the third tab surface 1401 located at the second bent portion 142. In this way, the physical isolation by the third insulation piece 180 reduces the risk that the burrs on the second bent portion 142 pierce the packaging bag 110, and reduces the risk of short-circuiting between the second bent portion 142 and the packaging bag 110. Similarly, the physical isolation by the third insulation piece 180 reduces the risk that the second bent portion 142 is impacted and short-circuited to the first electrode plate 121 during a drop of the secondary battery 100, thereby improving the safety performance and reliability of the secondary battery 100.

In some embodiments, as shown in FIG. 17 to FIG. 18, the secondary battery 100 further includes a fourth insulation piece 190. The fourth insulation piece 190 is disposed on the fourth tab surface 1402 located at the second bent portion 142. In this way, the fourth insulation piece 190 can physically isolate the burrs of the second tab 140 on the fourth tab surface 1402, thereby reducing the risk that the burrs of the second bent portion 142 pierce the separator 123, reducing the risk of short-circuiting between the fourth connecting portion 143 and the first electrode plate 121, and improving the safety of the secondary battery 100.

In some embodiments, the fourth insulation piece 190 covers the second groove 1222a. In this case, the fourth insulation piece 190 fully covers the part, located in the second groove 1222a, of the fourth connecting portion 143. The fourth insulation piece 190 covers a larger area of the second current collector 1221, thereby implementing a firmer connection between the fourth insulation piece 190 and the second current collector 1221, and in turn, enabling the fourth insulation piece 190 to be more firmly disposed at the second bent portion 142. In addition, the fourth insulation piece 190 can also prevent the fourth connecting portion 143 from detaching from the third region 1221a, and can reduce the risk that the burrs on the fourth connecting portion 143 pierce the separator 123. Understandably, the sealing element 160 may also be disposed between the third connecting portion 141 and the sealing edge 112, thereby strengthening the connection between the third connecting portion 141 and the sealing edge 112 and improving the hermeticity at the sealing edge 112.

The fourth insulation piece 190 is also partially disposed on a surface of a part, extending out of the third region 1221a, of the fourth connecting portion 143, thereby suppressing the second bent portion 142 from bending toward the electrode assembly 120, and in turn, indirectly prolonging the time for transmitting the impact of the electrode assembly 120 to the sealing edge 112, reducing the impact force of the electrode assembly 120 on the sealing edge 112, and reducing the risk of rupture at the sealing edge 112. Understandably, of the sealing element 160 disposed between the second tab 140 and the sealing edge 112, a first part 1621 is disposed on the third tab surface 1401, and a second part 1622 is disposed on the fourth tab surface 1402. The dimensional relationship between the first part 1621 located on the third tab surface 1401 and the third insulation piece 180 in the first direction X may be learned by referring to the dimensional relationship between the first part 1621 located on the first tab surface 1301 and the first insulation piece 150 in the first direction X, the details of which are omitted here.

Similarly, the dimensional relationship between the second part 1622 located on the fourth tab surface 1402 and the fourth insulation piece 190 in the first direction X may be learned by referring to the dimensional relationship between the second part 1622 located on the second tab surface 1302 and the second insulation piece 170 in the first direction X, the details of which are omitted here.

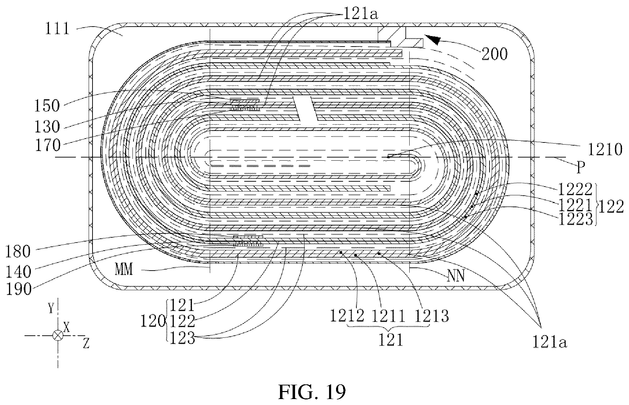

In some other embodiments, the electrode assembly 120 assumes a jelly-roll structure, in which the first electrode plate 121, the second electrode plate 122, and the separator 123 are stacked and wound. Along the second direction Y, the second connecting portion 133 and the fourth connecting portion 143 are located on two sides of the jelly-roll structure respectively. For ease of understanding, referring to FIG. 19, the first electrode plate 121 includes a plurality of flat portions 121a. The plurality of flat portions 121a are the part, located between the straight line MM and the straight line NN, of the first electrode plate 121 in FIG. 2. Each of flat portions 121a is perpendicular to the second direction Y. The first electrode plate 121 includes a winding start edge 1210 along the winding direction. A plane parallel to the plurality of flat portions 121a and passing through the winding start edge 1210 is defined as a winding center plane P. Observed along the first direction X, the first tab 130 and the second tab 140 are located on two sides of the winding center plane P respectively, thereby reducing the risk that the distance between the second connecting portion 133 and the fourth connecting portion 143 in the second direction Y is excessively short and adversely affects the sealing effect of the sealing edge 112.

Further, the first groove 1212a and the second groove 1222a do not overlap in the second direction Y. In other words, there is spacing between the second connecting portion 133 and the fourth connecting portion 143 in the third direction Z. The third direction Z is a direction perpendicular to the first direction X and the second direction Y. This arrangement reduces the risk that a part of the electrode assembly 120 is thickened due to the overlap between the second connecting portion 133 and the fourth connecting portion 143 in the second direction Y.

Understandably, the third insulation piece 180 and the fourth insulation piece 190 may be insulation tape or other materials as long as the materials can serve the function of insulation. In this embodiment, the third insulation piece 180 and the fourth insulation piece 190 each independently include a substrate layer and an adhesive layer. The adhesive layer is configured to directly bond to the second tab 140. The substrate layer may be made of materials including polypropylene, polyethylene terephthalate, polyimide, and the like. The adhesive layer may be made of materials including acrylate ester, rubber, silicone, polyurethane, polyolefin, and the like.

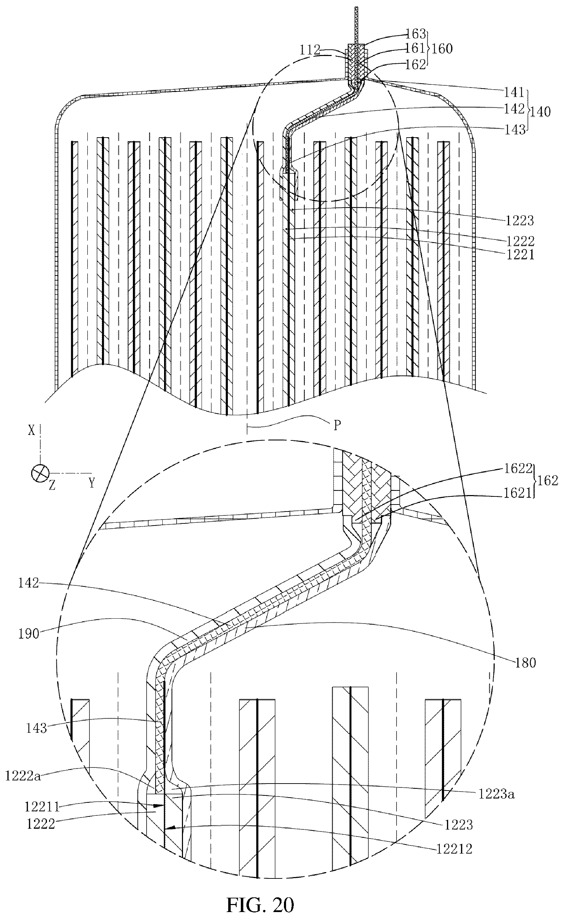

In some other embodiments, the second electrode plate 122 may be provided with grooves on both sides, as shown in FIG. 20, which is different from the structure in which the second electrode plate 122 is provided with a groove on a single side in the above-mentioned embodiment. The fourth active material layer 1223 is provided with a third groove 1223a that exposes at least a part of the fourth region 1221b. The third groove 1223a is disposed opposite to the second groove 1222a. In other words, at least a part of the fourth region 1221b is not covered by the fourth active material layer 1223.

The second electrode plate 122 is provided with the second groove 1222a, and the fourth connecting portion 143 is at least partially disposed in the second groove 1222a, thereby reducing the risk that the thickness of the second tab 140 makes the secondary battery 100 thicker, and contributing to improvement of the energy density of the secondary battery 100. In addition, at least a part of the fourth region 1221b opposite to the second groove 1222a is not provided with the fourth active material layer 1223, thereby improving the heat dissipation capability of the second tab 140 through the second current collector 1221 during charging and discharging, reducing the impact on the expansion or shrinkage of the fourth active material layer 1223 in the fourth region 1221b during charging and discharging caused by an excessively high current density at a joint between the fourth connecting portion 143 and the second current collector 1221, and increasing the lifespan of the secondary battery 100. The second tab 140 includes a second bent portion 142 that is bent toward the second direction Y. The second bent portion 142 plays a role in mitigating the impact on the electrode assembly 120 when the second tab 140 is impacted by an external force, reduces the pulling force between the fourth connecting portion 143 and the third region 1221a, reduces the risk of failure of the secondary battery 100, and improves the safety of the secondary battery 100.

In some embodiments, the fourth connecting portion 143 is connected to the third region 1221a by ultrasonic welding or resistance welding. In other words, through the welding configuration, the fourth connecting portion 143 and the fourth region 1221b can be pressed against each other to implement welding, so that the connection between the fourth connecting portion 143 and the second current collector 1221 is highly reliable.

Understandably, the third insulation piece 180 may extend along a direction opposite to the first direction X and cover at least a part of the third groove 1223a to reduce the risk that the burrs on the second current collector 1221 in the fourth region 1221b pierce the separator 123 and cause a short circuit, and to reduce the risk of detachment of the material at the third groove 1223a, thereby improving the safety and stability of the secondary battery 100.

In some embodiments, referring back to FIG. 2 or FIG. 19, the secondary battery 100 includes an adhesive piece 200. The adhesive piece 200 bonds the packaging bag 110 and the electrode assembly 120 together, so that the packaging bag 110 and the electrode assembly 120 are relatively fixed, thereby reducing the risk of wobbling of the electrode assembly 120 relative to the packaging bag 110, reducing the impact of the adhesive piece 200 on the reliability of the connection between the second connecting portion 133 and the first region 1211a during a drop, and reducing the impact on the second active material layer 1213 provided in the second region 1211b. In this embodiment, the adhesive piece 200 is double-sided tape. Definitely, the adhesive piece 200 may be another type of adhesive instead, and is not limited to the example mentioned here, as long as the adhesive piece can serve the function of bonding and fixing between the packaging bag 110 and the electrode assembly 120. Further, when the electrode assembly 120 assumes a jelly-roll structure, the adhesive piece 200 may be disposed on the outermost surface of the electrode assembly 120. The adhesive piece 200 is bonded to a part of the inner surface of the packaging bag 110, the part being opposite to the first region 1211a. In addition, the edge of the adhesive piece 200 extends along the winding direction beyond a winding termination edge of the outermost electrode plate (the first electrode plate or the second electrode plate) of the electrode assembly 120, thereby bundling the electrode assembly 120 tightly and reducing the risk of the electrode assembly 120 falling apart.

A secondary battery 100 provided in an embodiment of this application includes a packaging bag 110, an electrode assembly 120, and a first tab 130. The electrode assembly 120 is housed in the packaging bag 110. The packaging bag 110 is provided with a sealing edge 112. The electrode assembly 120 includes a first electrode plate 121, a second electrode plate 122, and a separator 123. The separator 123 is disposed between the first electrode plate 121 and the second electrode plate 122. The first electrode plate 121 includes a first current collector 1211, a first active material layer 1212, and a second active material layer 1213. The first current collector 1211 includes a first surface 12111 and a second surface 12112 opposite to each other. The first active material layer 1212 is disposed on the first surface 12111. The second active material layer 1213 is disposed on the second surface 12112. The first surface 12111 includes a first region 1211a. The first active material layer 1212 is provided with a first groove 1212a exposing the first region 1211a. The second surface 12112 includes a second region 1211b corresponding to the first region 1211a. The second region 1211b is covered by the second active material layer 1213. The first tab 130 includes a first connecting portion 131, a first bent portion 132, and a second connecting portion 133 that are connected in sequence. The first connecting portion 131 extends out of the packaging bag 110 from a sealing edge 112. The second connecting portion 133 is at least partially located in the first groove 1212a and connected to the first region 1211a. The first bent portion 132 is bent relative to the second connecting portion 133 toward the second direction Y.

In this way, the first electrode plate 121 is provided with the first groove 1212a, and the second connecting portion 133 is at least partially disposed in the first groove 1212a, thereby reducing the risk that the thickness of the first tab 130 makes the secondary battery 100 thicker, and contributing to improvement of the energy density of the secondary battery 100. In addition, the second active material layer 1213 is provided in the second region 1211b opposite to the first region 1211a, thereby reducing the risk of thickness unevenness caused by double-sided grooving of the first electrode plate 121. The first tab 130 includes a first bent portion 132 bent toward the second direction Y. When the secondary battery 100 drops or collides, the first bent portion 132 can reduce the impact force of the electrode assembly 120 on the sealing edge 112, reduce the risk of electrolyte leakage from the sealing edge 112 caused by the impact of the electrode assembly 120, and improve the safety of the secondary battery 100. In addition, the first bent portion 132 can serve as a buffer section for the first tab 130, and reduce the direct pulling imposed by the first connecting portion 131 on the second connecting portion 133, thereby improving the stability of connection between the second connecting portion 133 and the first region 1211a, and improving the reliability of the secondary battery 100.

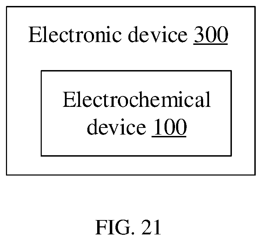

As shown in FIG. 21, an electronic device 300 provided in another embodiment of this application includes the secondary battery 100 disclosed in the above embodiment. The electronic device 300 of this application is not particularly limited, and may be any electronic device known in the prior art. For example, the electronic device 300 includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Finally, it is hereby noted that the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to the technical features of the packaging bag in the technical solutions. Such modifications and replacements do not make the essence of the corresponding technical solutions depart from the scope of the technical solutions of the embodiments of this application.

## Claims

1. A secondary battery, comprising a packaging bag, an electrode assembly, and a first tab; wherein the electrode assembly is housed in the packaging bag, the packaging bag is provided with a sealing edge; the electrode assembly comprises a first electrode plate, a second electrode plate, and a separator disposed between the first electrode plate and the second electrode plate;
the first electrode plate comprises a first current collector, a first active material layer, and a second active material layer; the first current collector comprises a first surface and a second surface opposite to each other; the first active material layer is disposed on the first surface; the second active material layer is disposed on the second surface; the first surface comprises a first region; the first active material layer is provided with a first groove exposing the first region; the second surface comprises a second region corresponding to the first region; and the second region is covered by the second active material layer;
the first tab comprises a first connecting portion, a first bent portion, and a second connecting portion connected in sequence; the first connecting portion extends out of the packaging bag from the sealing edge, and the second connecting portion is at least partially located in the first groove and connected to the first region; and
a direction in which the first connecting portion extends out of the packaging bag is a first direction, and a direction from the first region to the second region is a second direction, the first direction is perpendicular to the second direction, and the first bent portion is bent relative to the second connecting portion toward the second direction.

2. The secondary battery according to claim 1, wherein a direction perpendicular to both the first direction and the second direction is a third direction; viewed from the third direction, an acute angle formed by the first bent portion and the second direction is β, and 20° ≤ β ≤ 70°.

3. The secondary battery according to claim 2, wherein 30° ≤ β ≤ 60°.

4. The secondary battery according to claim 1, wherein the first tab comprises a first tab surface and a second tab surface opposite to each other, and a part of the first tab surface located in the second connecting portion is connected to the first region;
the secondary battery comprises a sealing element, the sealing element comprises a sealing portion and a first extension portion, the sealing portion is configured to be hermetically connected to the sealing edge, the first extension portion extends from the sealing portion toward an interior of the packaging bag, the first extension portion comprises a first part, and the first part is disposed on the first tab surface; and
the secondary battery further comprises a first insulation piece, the first insulation piece is at least partially disposed on a part of the first tab surface located in the first bent portion, and one end of the first insulation piece abuts the first part.

5. The secondary battery according to claim 4, wherein the first insulation piece covers at least a part of the first part.

6. The secondary battery according to claim 5, wherein the first insulation piece extends along a direction opposite to the first direction and covers a part of the second active material layer.

7. The secondary battery according to claim 4, wherein the first insulation piece and the first part are of a one-piece member.

8. The secondary battery according to claim 1, wherein the first current collector comprises a first edge and a second edge opposite to each other in the first direction, the first tab extends out of the first current collector from the first edge, the first current collector is provided with a first notch recessed from the first edge toward the second edge, and the second connecting portion at least partially overlaps the first notch in the second direction.

9. The secondary battery according to claim 1, wherein the second connecting portion is irradiated with a laser beam so that the second connecting portion is welded to the first region.

10. The secondary battery according to any one of claims 4 to 9, wherein the first extension portion further comprises a second part disposed on the second tab surface;
the secondary battery further comprises a second insulation piece, the second insulation piece is at least partially disposed on a part of the second tab surface located in the first bent portion, and one end of the second insulation piece abuts the second part.

11. The secondary battery according to claim 10, wherein the second insulation piece covers at least a part of the second part.

12. The secondary battery according to claim 11, wherein another end of the second insulation piece extends along a direction opposite to the first direction and covers at least a part of the first groove.

13. The secondary battery according to claim 11, wherein the second insulation piece and the second part are formed as a single piece.

14. The secondary battery according to claim 1, wherein the second electrode plate comprises a second current collector, a third active material layer, and a fourth active material layer; the second current collector comprises a third surface and a fourth surface opposite to each other; the third active material layer is disposed on the third surface; the fourth active material layer is disposed on the fourth surface; the third surface comprises a third region; the third active material layer is provided with a second groove exposing the third region; the fourth surface comprises a fourth region corresponding to the third region; and at least a part of the fourth region is not covered by the fourth active material layer;
the secondary battery further comprises a second tab; the second tab comprises a third connecting portion, a second bent portion, and a fourth connecting portion that are connected in sequence; the third connecting portion extends out of the packaging bag from the sealing edge, the fourth connecting portion is at least partially located in the second groove and connected to the third region, and the fourth connecting portion is connected to the third region by ultrasonic welding or resistance welding; and
the second direction is a direction from the third region to the fourth region, and the second bent portion is bent toward the second direction.

15. The secondary battery according to claim 1, wherein the second electrode plate comprises a second current collector, a third active material layer, and a fourth active material layer; the second current collector comprises a third surface and a fourth surface opposite to each other; the third active material layer is disposed on the third surface; the fourth active material layer is disposed on the fourth surface; the third surface comprises a third region; the third active material layer is provided with a second groove exposing the third region; the fourth surface comprises a fourth region corresponding to the third region; and the fourth region is covered by the fourth active material layer;
the secondary battery further comprises a second tab; the second tab comprises a third connecting portion, a second bent portion, and a fourth connecting portion that are connected in sequence, the third connecting portion extends out of the packaging bag from the sealing edge, the fourth connecting portion is at least partially located in the second groove and connected to the third region, and the fourth connecting portion is connected to the third region by laser welding; and
the second direction is a direction from the third region to the fourth region, and the second bent portion is bent toward the second direction.

16. The secondary battery according to claim 15, wherein the first electrode plate, the second electrode plate, and the separator are stacked and wound to form a jelly-roll structure; along the second direction, the second connecting portion and the fourth connecting portion are located on two sides of the jelly-roll structure respectively, and the first groove does not overlap the second groove.

17. The secondary battery according to claim 1, wherein the first electrode plate is a positive electrode plate, the second electrode plate is a negative electrode plate, and the first current collector is an aluminum foil; and in the first direction, the second electrode plate exceeds the first electrode plate, and the separator exceeds the second electrode plate.

18. The secondary battery according to claim 4, wherein the sealing element comprises at least one of polyethylene, polypropylene, polyurethane, polyethylene terephthalate, or poly(ethylene-co-propylene); and/or
the first insulation piece comprises a substrate layer and an adhesive layer disposed on the substrate layer.

19. The secondary battery according to claim 1, wherein the secondary battery further comprises an adhesive piece configured to bond the packaging bag to the electrode assembly, and the adhesive piece is affixed to an inner surface, opposite to the first region, of the packaging bag.

20. An electronic device, **characterized in that** the electronic device comprises the secondary battery according to any one of claims 1 to 19.
